# EUROPÄISCHE PATENTSCHRIFT

(11) **EP 0 356 830 B1**
(45) Veröffentlichungstag und Bekanntmachung des Hinweises auf die Patenterteilung: **24.02.1993**
(21) Anmeldenummer: 89115227.4
(22) Anmeldetag: 18.08.1989
(51) Int. Cl.: B23Q 3/157

(54) **Werkzeugmaschine**
Machine tool
Machine-outil

(30) Priorität: 27.08.1988 DE 3829105
(43) Veröffentlichungstag der Anmeldung: 07.03.1990
(73) Patentinhaber: CHIRON-WERKE GMBH & CO. KG, 78532 Tuttlingen (DE)
(72) Erfinder: Winkler, Hans-Henning, Dr., D-7200 Tuttlingen (DE); Rütschle, Eugen, D-7202 Mühlheim (DE)
(74) Vertreter: Witte, Alexander, Dr.-Ing.

(56) Entgegenhaltungen:
- EP-A- 0 186 726
- DE-C- 3 627 515
- DE-U- 8 716 734
- US-A- 4 309 809
- PATENT ABSTRACTS OF JAPAN, Band 10, Nr. 200 (M-498)[2256] 12. Juli 1986; & JP-A-61 044 549 (BROTHER IND.) 04-03-1986

## Beschreibung

Die Erfindung betrifft eine Werkzeugmaschine mit einer rotierenden Spindel und mit einer Mehrzahl von Werkzeughaltern, die einen Konus aufweisen und aus einer von der Spindel beabstandeten Magazinposition mit dem Konus in eine Arbeitsposition in der Spindel einsetzbar sind, während die übrigen Werkzeughalter während eines Bearbeitungsvorganges in der Magazinposition gehalten werden, wobei die Werkzeughalter mittels eines Greifarmes jeweils einzeln in die Spindel eingesetzt werden, und die Greifarme um die Spindel herum verteilt angeordnet sowie gemeinsam an einer relativ zur Spindel in Richtung der Spindelachse verschiebbaren, die Spindel umschließenden Hülse befestigt sind, und ferner die Werkzeughalter auf ihrem Weg zwischen Magazinposition und Arbeitsposition im wesentlichen vertikalachsig gehalten sind.

Eine Werkzeugmaschine der vorstehend genannten Art ist aus dem Dokument DE-A-32 33 934 bekannt.

Bei dieser bekannten Werkzeugmaschine ist der Spindelstock der Spindel vertikalachsig ausgerichtet und entlang mehrerer Koordinatenachsen relativ zu einem Werkstücktisch verfahrbar. Am Spindelstock ist eine die Spindel umschließende Hülse vorgesehen, die in vertikaler Richtung relativ zur Spindel verschiebbar ist. Die Hülse trägt eine Vielzahl von Greifarmen, die im wesentlichen in einer zur Spindelachse radial verlaufenden Ebene verschwenkbar sind. Die Greifarme weisen jeweils Parallelogrammführungen auf und laufen an ihrem unteren Ende in einen Greifer aus, der jeweils mit einem Werkzeughalter bestückt ist.

In einer Magazinposition sind die Greifarme mit den Werkzeughaltern vertikal nach oben verschwenkt, so daß die Werkzeughalter mit den Werkzeugen sowohl oberhalb wie auch seitlich beabstandet von der Spindel angeordnet sind. Zum Einsetzen eines Werkzeuges wird nun einer der Greifarme nach unten verschwenkt, wobei die Einführbewegung des Werkzeughalters in die Aufnahme der Spindel durch relatives Verfahren der Hülse am Spindelstock erreicht wird, unabhängig von der absoluten vertikalen Position der Spindel relativ zum Werkstücktisch.

Bei der bekannten Werkzeugmaschine sind die Werkzeughalter mit genormten Kegeln versehen, die in eine entsprechend geformte konische Aufnahme der Spindel passen.

Aus dem Dokument DE-C-36 27 515 ist eine Werkzeugmaschine bekannt, die als Konsol-Fräsmaschine ausgebildet und an einen horizontalen Werkzeugtisch angebaut ist. An zwei gegenüberliegenden seitlichen Schmalseiten des Werkstücktisches sind Schwenkarme angelenkt, die um eine horizontale Achse mittels einer Kolben-Zylinder-Einheit jeweils in einer Vertikalebene verschwenkbar sind. Die freien Enden der Schwenkarme tragen einen Werkzeugträger, an dem eine Reihe von Werkzeugaufnahmen befestigt ist, die in bekannter Weise zur sicheren Halterung von Werkzeugkegeln ausgelegt sind.

In einer abgeschwenkten Magazinposition befindet sich der gesamte Werkzeugträger, der etwa so breit wie der Werkstücktisch ist, in einer Position unterhalb der Auflage des Werkstücktisches und damit weit außerhalb des Verfahrbereiches der in mehreren Koordinatenrichtungen verfahrbaren Frässpindel. In dieser abgesenkten Magazinposition klappt eine zum Werkzeugträger parallele Leiste, an der eine Reihe von Schutzhütchen befestigt ist, derart um, daß die Schutzhütchen die Werkzeugkegel abdecken. Auf diese Weise wird erreicht, daß Ablagerungen von Spülflüssigkeit, Schmutzpartikeln und Spänen an den Kegeloberflächen verhindert werden. Wird der Werkzeugträger hingegen in eine obere Stellung hochgeschwenkt, so wird gleichzeitig die Leiste mit den Schutzhütchen weggeklappt, mit der Folge, daß die Werkzeugkegel freiliegen. Die in mehreren Koordinaten verfahrbare Spindel kann nun einen der Werkzeugkegel in dem ansonst nicht beweglichen Werkzeugträger anfahren und eines der Werkzeuge übernehmen. Nach der Übernahme des ausgewählten Werkzeuges schwenkt der Werkzeugträger in der bereits beschriebenen Weise wieder in die Magazinstellung zurück.

Aus dem Dokument FR--A-2 547 230 ist eine weitere Werkzeugmaschine bekannt, die beispielsweise als Fräsmaschine ausgebildet sein kann. Diese bekannte Maschine ist mit einem trommelartigen Werkzeugmagazin versehen, dessen Drehachse vertikal verläuft. Zwischen der Spindel der Werkzeugmaschine und dem Werkzeugmagazin befindet sich ein Werkzeugwechsler mit einem um eine vertikale Achse verschwenkbaren Greifarm. Mittels des Greifarmes kann ein Werkzeug in vertikaler Ausrichtung aus dem Werkzeugmagazin entnommen, zur Spindel herübergeschwenkt und dort in die Spindel eingesetzt werden. Das Werkzeugmagazin ist mit vertikalachsigen Töpfen versehen, die zur Aufnahme der Kegel der Werkzeuge dienen. Diese Töpfe sind mit einem vertikalen Durchgang versehen, der in der unteren Hälfte als zu den Kegeln der Werkzeuge komplementärer Innenkonus und oben als zylindrischer Durchgang ausgebildet ist.

Aus dem Dokument US-A-4 309 809 ist eine Werkzeugmaschine mit automatischem Werkzeugwechsler bekannt. Bei dieser bekannten Werkzeugmaschine ist das Werkzeugmagazin nach Art einer Trommel ausgebildet, in der die Werkzeughalter auf einem Kreis um eine gemeinsame Achse parallelachsig zueinander angeordnet sind. Die Trommel ist dabei mit ihrer Symmetrieachse schräg zur Vertikalen angestellt. Die Trommel bildet einen nach oben offenen Ringraum, der nach außen von einer umlaufenden, ringförmigen Wand begrenzt wird, die lediglich an einer Umfangsstellung unterbrochen ist, damit dort ein Werkzeugwechsel aus dem Magazin heraus und in das Magazin hinein stattfinden kann.

Aus dem Dokument PATENT ABSTRACTS OF JAPAN, Band 10, Nr. 200 (M-498) (2256) vom 12. Juli 1986 sowie aus dem korrespondierenden Dokument JP-A-61 044 549 ist ein Werkzeugwechsler für eine Werkzeugmaschine ähnlicher Bauart bekannt. Auch bei diesem Werkzeugwechsler ist das Werkzeugmagazin als nach oben offene Trommel ausgebildet, die zur Vertikalachse geneigt angeordnet ist.

Aus dem Dokument DE-U-87 16 734 ist eine Schutzhaube für eine Werkzeug-Aufnahme bekannt. Die Schutzhaube ist als nach unten offenes topfförmiges Teil ausgebildet. Ein Werkzeughalter kann mit seinem Kegel von unten in die Schutzhaube eingeführt werden. In der Schutzhaube ist ein Rastmechanismus vorgesehen, der oben an einer Einschnürung am oberen Kegelende angreift und den Werkzeughalter gegen Herausfallen sichert. Zur Entnahme des Werkzeughalters aus der Schutzhaube, d.h. zur Entriegelung desselben wird der Werkzeughalter verschwenkt, d.h. in seiner Symmetrieachse zur Vertikalen geneigt. Dies ist bei Werkzeughaltern der hier interessierenden Art nur von Hand möglich.

Aus dem Dokument EP-A-0 186 726 ist ein Werkzeugmagazin bekannt. Das bekannte Werkzeugmagazin ist unterhalb eines nach vorne auskragenden Werkstücktischs angeordnet. Dort befindet sich ein Kasten mit einer stirnseitigen Klappe, in dem der Werkzeughalter in der Ruheposition gegen Spänebefall und gegenüber der Spülflüssigkeit geschützt aufgenommen ist.

Der Erfindung liegt demgegenüber die Aufgabe zugrunde, eine Werkzeugmaschine der eingangs genannten Art dahingehend weiterzubilden, daß die in der Magazinstellung befindlichen Werkzeughalter, insbesondere deren Kegel, zu jedem Zeitpunkt sicher von herumspritzender Bohrflüssigkeit und herumfliegenden Metallspänen geschützt sind.

Diese Aufgabe wird erfindungsgemäß dadurch gelöst, daß die Werkzeughalter in der Magazinposition in jeweils einen als Köcher ausgestalteten Hohlraum eingeführt sind, der mindestens für die Konusse eine geschlossene Abdeckung bildet, und daß der Köcher nach unten geöffnet sowie in der Hülse ausgebildet ist.

Die der Erfindung zugrundeliegende Aufgabe wird auf diese Weise vollkommen gelöst. Die Werkzeughalter sind nach der Erfindung nämlich in der Magazinposition immer von dem Köcher abgedeckt und zwar durch eine von oben aufgesetzte Abdeckung, so daß eine Verschmutzung der Kegel der Werkzeughalter ausgeschlossen ist.

Bei einer bevorzugten Ausführungsform der Erfindung ist ein Deckel vorgesehen, um den Hohlraum zu verschließen, wenn sich der zugehörige Werkzeughalter in der Arbeitsposition befindet.

Diese Maßnahme hat den Vorteil, daß Metallspäne noch nicht einmal mittelbar auf den Konus der Werkzeughalter gelangen können, etwa dadurch, daß sie in einen geöffneten Hohlraum eines gerade in der Arbeitsposition befindlichen Werkzeughalters eindringen und sich dann später auf dem Konus absetzen, der nach Beendigung des jeweiligen Bearbeitungsschrittes wieder in den betreffenden Hohlraum zurückgeführt wird.

Besonders bevorzugt ist bei dieser Ausführungsform eine Variante, bei der der Deckel als Blech an einem verschwenkbaren Abschnitt des Greifarmes ausgebildet ist, wobei das Blech beim Verschwenken des Werkzeughalters von der Magazinposition in die Arbeitsposition mittels des Greifarmes selbsttätig in eine den Hohlraum verschließende Position verschwenkt wird.

Diese Maßnahme hat den besonderen Vorteil, daß keinerlei separate Betätigungsmittel vorgesehen werden müssen, um den Hohlraum zu verschließen, weil sich das Blech selbsttätig vor die Öffnung des Hohlraumes setzt, wenn der zugehörige Werkzeughalter von der Magazinposition in die Arbeitsposition überführt wird. Dabei ist ferner von Vorteil, daß das Blech in vielfältiger Weise ausgebildet werden kann, z.B. um auch weitere Aggregate in der Nähe des Werkzeugmagazins zu schützen.

Ein Ausführungsbeispiel der Erfindung ist in der Zeichnung dargestellt und wird in der nachfolgenden Beschreibung näher erläutert. Es zeigen:
- Fig. 1: eine Seitenansicht, teilweise im Schnitt, durch eine Werkzeugwechseleinrichtung einer erfindungsgemäßen Werkzeugmaschine, mit einem in Magazinposition befindlichen Werkzeughalter;
- Fig. 2: eine Darstellung, ähnlich Fig. 1, jedoch für den Werkzeughalter in einer Zwischenposition;
- Fig. 3: eine weitere Darstellung, ähnlich Fig. 1, jedoch für einen Werkzeughalter in Arbeitsposition;
- Fig. 4: in vergrößertem Maßstab einen Ausschnitt aus Fig. 3 zur Erläuterung weiterer Einzelheiten der Erfindung;
- Fig. 5: eine Draufsicht auf einen ersten Stab eines Greifers der Anordnungen gem. den Fig. 1 bis 4;
- Fig. 6: eine Darstellung, ähnlich Fig. 5, jedoch betreffend einen weiteren Stab des Greifers.

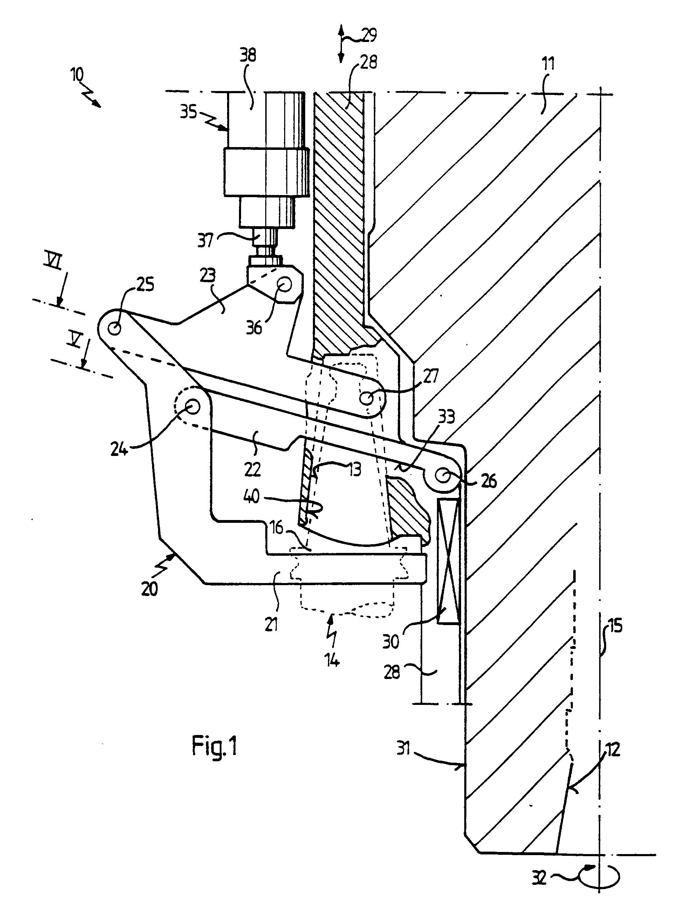

In Fig. 1 bezeichnet 10 insgesamt eine erfindungsgemäße Werkzeugmaschine, bei der ein Spindelstock eine rotierende Spindel 11 mit konusförmiger Aufnahme 12 aufweist.

Die Aufnahme 12 der Spindel 11 ist so ausgelegt, daß sie komplementär zu einem Konus 13 eines genormten Werkzeughalters 14 ausgebildet ist. Die Werkzeughalter 14 werden bei der Werkzeugmaschine 10 in einer Position gehalten, in der ihre Achse parallel zu einer Spindelachse 15 verläuft. Die Werkzeug halter 14 sind unterhalb des Konus 13 mit einem Ringflansch 16 versehen, an den sich nach unten ein Werkzeug, beispielsweise ein Bohrer oder ein Fräser anschließt.

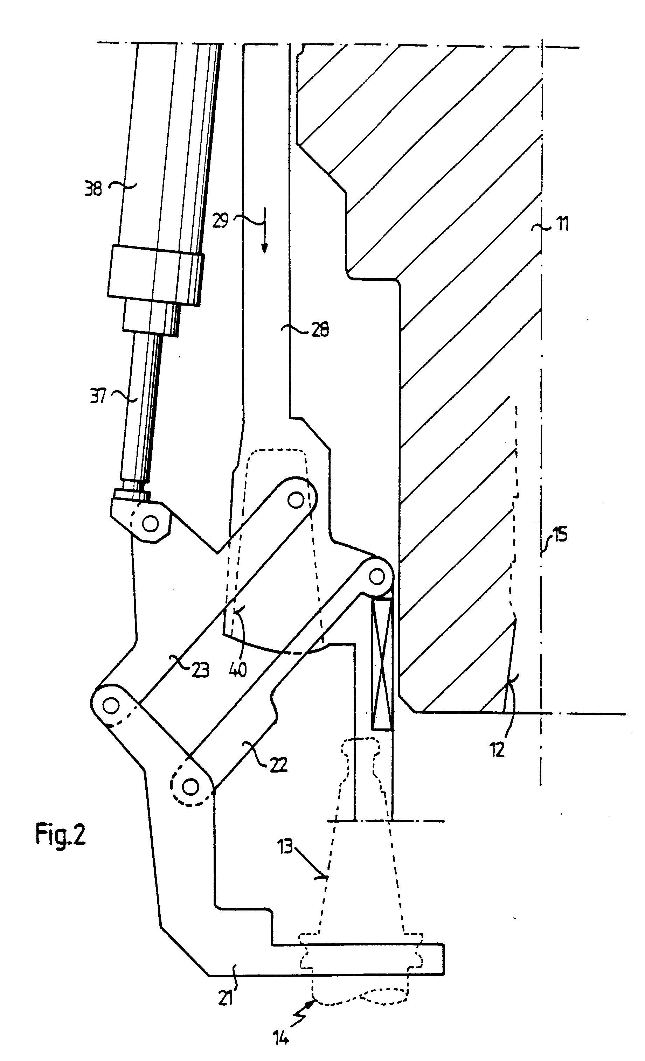

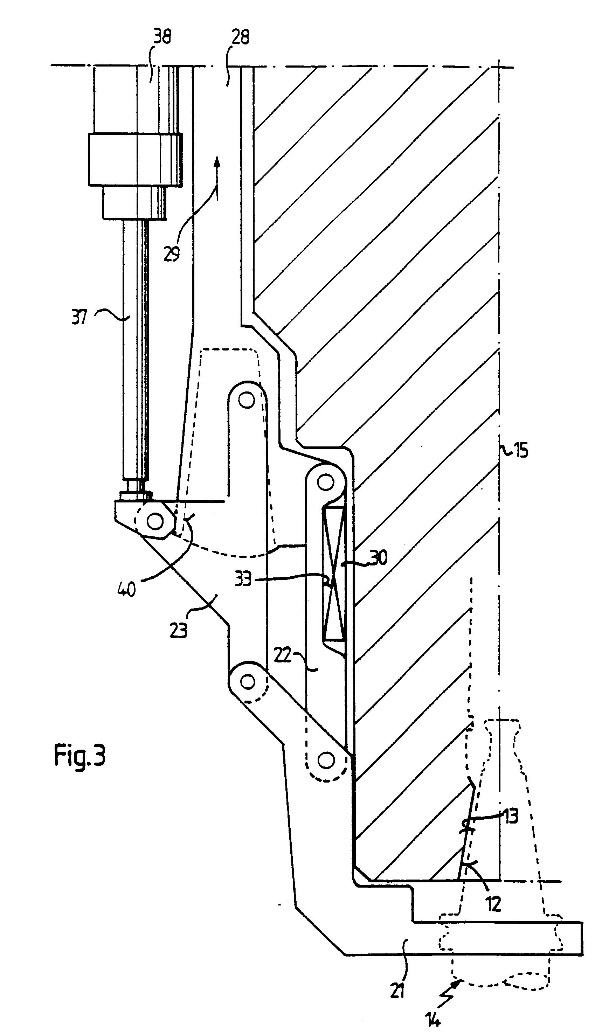

Bei der Werkzeugmaschine 10 sind mehrere Werkzeughalter 14 um die Spindel 11 herum angeordnet und können jeweils einzeln aus der in Fig. 1 dargestellten Magazinposition der Werkzeughalter 14 in eine Arbeitsposition in der Aufnahme 12 der Spindel 11 verschwenkt werden, wie dies weiter unten anhand der Fig. 2 und 3 noch erläutert werden wird.

Zum Einwechseln von Werkzeughaltern 14 in die Spindel 11 bzw. zum nachfolgenden Auswechseln ist ein Werkzeugwechsler vorgesehen, der im wesentlichen aus einem fremdkraftbetätigten Greifarm 20 besteht. der Greifarm 20 geht nach unten in einen Greifer 21 über, der den Werkzeughalter 14 im Bereich des Ringflansches 16 ergreift. Der Greifer 21 ist dabei bevorzugt so ausgelegt, daß der Werkzeughalter 14 drehbar in ihm gehalten ist, so daß der Greifer 21 auch in der Arbeitsposition des Werkzeughalters 14 an diesem verbleibt, um auf diese Weise die Werkzeugwechselzeiten zu reduzieren.

Um die vertikalachsige Ausrichtung der Werkzeughalter 14 in jeder Phase des Werkzeughechselvorganges beizubehalten, ist der Greifer 21 Teil einer Parallelogrammführung, die darüberhinaus aus einem ersten Stab 22 sowie einem dazu parallelen zweiten Stab 23 besteht. Die Stäbe 22, 23 sind am Greifer 21 mittels einer ersten Achse 24 bzw. einer zweiten Achse 25 unter ihren jeweils entgegengesetzten Enden in einer dritten Achse 26 bzw. einer vierten Achse 27 gelagert. Die Achsen 24 bis 27 verlaufen senkrecht zur Zeichenebene der Fig. 1.

Die dritte Achse 26 und die vierte Achse 27 befinden sich an einer Hülse 28, die die Spindel 11 umgibt. Die Hülse 28 ist in an sich bekannter Weise in der Vertikalen relativ zur Spindel 11 verschiebbar, wie mit einem Pfeil 29 angedeutet. Da die Spindel 11 gegenüber der Hülse 28 rotiert, ist im unteren Bereich der Hülse 28 ein Lager 30 zwischen Hülse 28 und Spindel 11 vorgesehen, das auf einer zylindrischen Oberfläche 31 der Spindel 11 läuft. Die Drehrichtung der Spindel 11 ist mit einem Pfeil 32 angedeutet. Der erste Stab 22 ist an seiner Unterseite mit einer Aussparung 33 versehen, deren Bedeutung in Bezug auf das Lager 30 weiter unten noch erläutert werden wird.

Zum Betätigen des Werkzeugwechslers ist an einem oberen Vorsprung des zweiten Stabes 23 eine Kolben-Zylinder-Einheit 35 über eine fünfte Achse 36 angelenkt, die parallel zu den Achsen 24 bis 27 verläuft. Die Kolben-Zylinder-Einheit 35 besteht im wesentlichen aus einem Kolben 37, der an der fünften Achse 36 gelenkig angreift sowie aus einem Zylinder 38, der an seinem oberen Ende (in Fig. 1 nicht dargestellt) schwenkbar an einem radialen Vorsprung der Hülse 28 gelagert ist.

Fig. 1 zeigt den Werkzeughalter 14 in der Magazinposition in der der Kolben 37 in den Zylinder 38 vollkommen eingezogen ist. Auch die Hülse 28 befindet sich in ihrer oberen Endstellung relativ zur Spindel 11.

Die Stäbe 22, 23 befinden sich in der Magazinposition in etwa horizontaler Ausrichtung, wobei die Achsen 24, 25 etwas höher liegen als die Achsen 26, 27. In dieser Lage ist der Konus 13 des Werkzeughalters 14 in einen Hohlraum 40 eingeführt, der sich an der Unterseite eines radialen Vorsprunges der Hülse 28 befindet. Der Hohlraum 40 ist nach Art eines Köchers ausgebildet und umgibt jeweils den Konus eines der mehreren Werkzeughalter 14.

Da der Werkzeughalter 14 unterhalb des Konus 13 in den radial vorspringenden Ringflansch 16 übergeht, ist der Hohlraum 40 bei eingesetztem Werkzeughalter 14 auch nach unten abgeschlossen. Dies bedeutet, daß der Konus 13 in der Magazinposition vollkommen abgedeckt ist. Wenn nun ein Werkzeug eines anderen Werkzeughalters, der gerade in die Spindelaufnahme 12 eingesetzt ist, an einem Werkstück arbeitet und ein Gemenge von Bohrwasser und Metallspänen bei hohen Spangeschwindigkeiten herumfliegt, so können sich keine Metallspäne auf dem Konus 13 der übrigen Werkzeughalter 14 absetzen, weil sich diese sämtlich in der Magazinposition befinden und im Hohlraum 40 abgedeckt gehalten werden. Wenn somit bei einem darauffolgenden Werkzeugwechsel ein anderer Werkzeughalter 14 mit seinem Konus 13 in die Spindelaufnahme 12 eingesetzt wird, besteht kein Risiko, daß ein auf dem Konus 13 kleben gebliebener Metallspan zwischen Konus 13 und Spindelaufnahme 12 eingeklemmt wird.

Fig. 2 zeigt eine Zwischenposition, in der der Kolben 37 nach unten aus dem Zylinder 38 ausgefahren wurde. Gleichzeitig wurde die Hülse 28 in Richtung des Pfeiles 29 nach unten verfahren. Infolgedessen nehmen die Stäbe 22, 23 eine nach links unten schräg geneigte Position ein. Durch die Absenkung der Hülse 28 befindet sich auch jetzt der Konus 13 des Werkzeughalters 14 unterhalb der Unterkante der Spindel 11.

Wie Fig. 3 zeigt, ist die Anordnung so getroffen, daß bei weiterem Ausfahren des Kolbens 37 die Stäbe 22, 23 noch weiter nach unten verschwenkt werden, bis sie eine vertikale Endposition erreichen, in der der Werkzeughalter 14 mit der Spindelachse 15 fluchtet.

Wird nun die Hülse 28 in dieser Stellung wieder in Richtung des Pfeiles 29 nach oben verschoben, gelangt der Werkzeughalter 14 mit seinem Konus 13 in die Spindelaufnahme 12, so daß der Werkzeughalter 14 dort mit den üblichen Spannzangen oder dgl. arretiert werden kann.

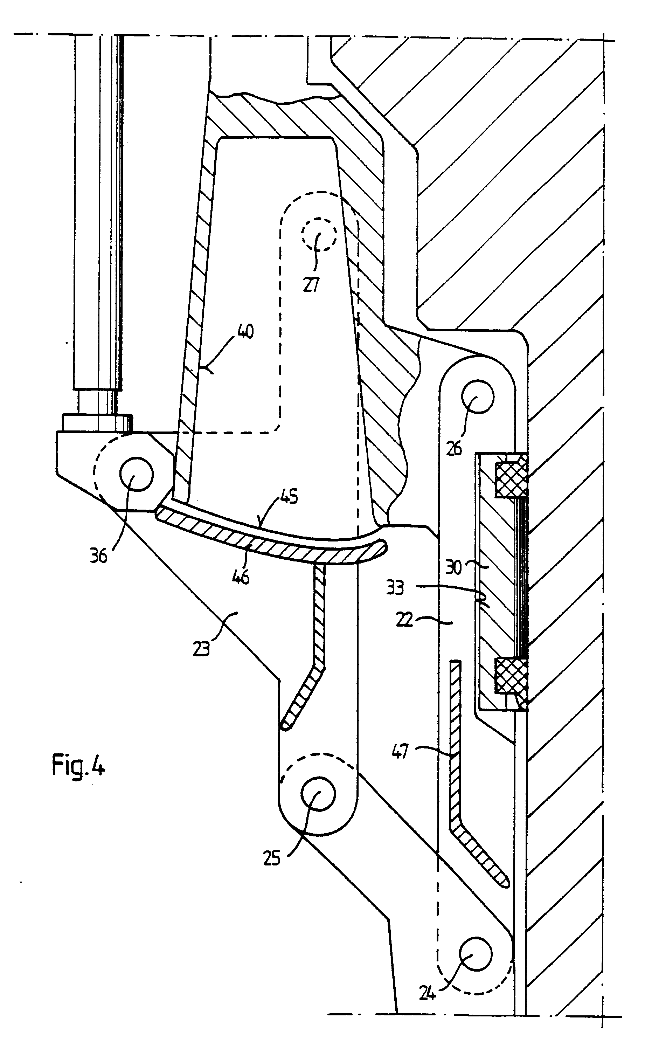

Fig. 4 zeigt weitere Einzelheiten der Darstellung gemäß Fig. 3 und man erkennt zunächst, daß der Hohlraum 40 eine untere Öffnung 45 aufweist, die in der Arbeitsposition des zugehörigen Werkzeughalters an sich offen wäre, weil sie nun nicht mehr vom Ringflansch 16 verschlossen wird.

Um jedoch zu verhindern, daß Späne in den Hohlraum 40 gelangen können, ist am zweiten Stab 23 ein erstes Blech 46 oder ein entsprechendes Kunststoffteil vorgesehen das sich im wesentlichen senkrecht zur Zeichenebene der Fig. 4 erstreckt. Das erste Blech 46 ist näherungsweise in Form eines Hohlzylindersegmentes ausgebildet, dessen Längsachse mit der vierten Achse 27 zusammenfällt. Entsprechendes gilt für die Ausbildung der unteren Öffnung 45, so daß bei einer Drehung des zweites Stabes 23 um die vierte Achse 27 sich das erste Blech 46 möglichst dicht über die untere Öffnung 45 schiebt. In der in Fig. 4 dargestellten unteren Extremstellung des zweiten Stabes 23 wird die untere Öffnung 45 auf diese Weise vollkommen abgedeckt.

Es ist ferner am ersten Stab 22 ein ähnliches zweites Blech 47 vorgesehen, mit dem das Lager 30 nach unten abgedeckt wird.

Man erkennt ferner aus Fig. 4, daß das Lager 30 gerade in die Aussparung 33 des ersten Stabes 22 paßt, wenn dieser in der unteren Extremstellung ist.

Die Bleche 46, 47 dienen ferner als mechanische Aussteifung für Seitenteile, aus denen die Stäbe 22, 23 bestehen.

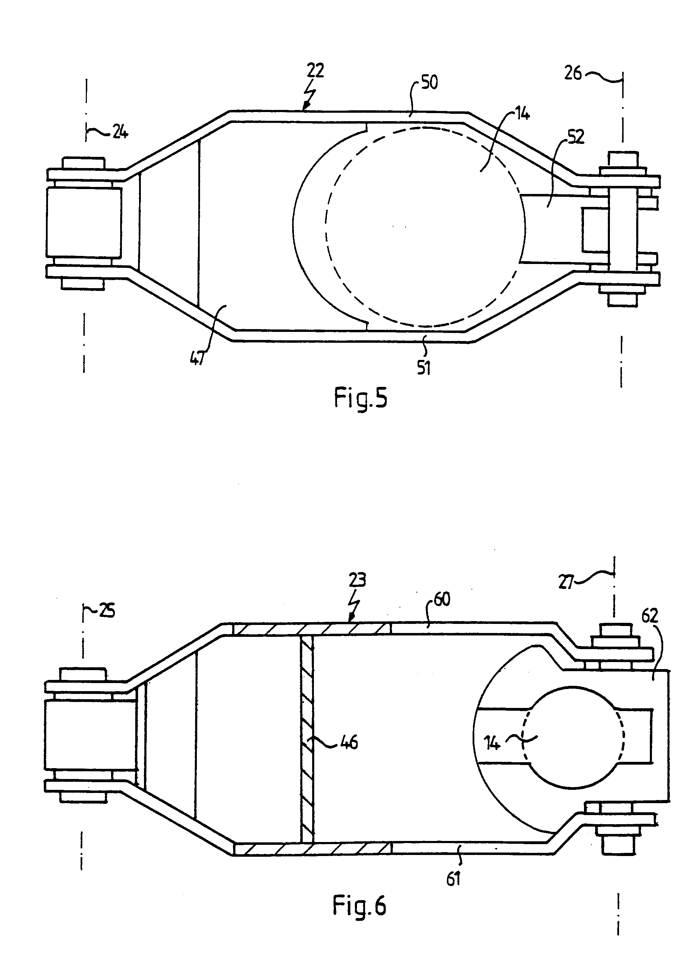

So zeigt Fig. 5 für den ersten Stab 22, daß dieser aus zwei klappsymmetrisch angeordneten Seitenteilen 50, 51 besteht, die an ihren Enden in den Achsen 24, 26 zusammengefaßt sind. Das zweite Blech 47 erstreckt sich zwischen diesen Seitenteilen 50, 51 und steift diese aus, wobei am zweiten Blech 57 eine entsprechende kreisbogenförmige Aussparung vorgesehen ist. Es kann ferner zwischen den Seitenteilen 50, 51 ein erster Halter 52 vorgesehen sein, um ein Verkippen des Werkzeughalters 14 zu verhindern.

Fig. 6 zeigt in entsprechender Weise Seitenteile 60, 61 des zweiten Stabes 23. Das erste Blech 46, das nun senkrecht zur Zeichenebene der Fig. 6 verläuft, dient ebenfalls als Aussparung zwischen den Blechen 60, 61. Auch hier ist wiederum ein Halter 62 vorgesehen, um ein Verkippen des Werkzeughalters 14 zu verhindern.

## Patentansprüche

1. Werkzeugmaschine mit einer rotierenden Spindel (11) und mit einer Mehrzahl von Werkzeughaltern (14), die einen Konus (13) aufweisen und aus einer von der Spindel (11) beabstandeten Magazinposition mit dem Konus (13) in eine Arbeitsposition in der Spindel (11) einsetzbar sind, während die übrigen Werkzeughalter (14) während eines Bearbeitungsvorganges in der Magazinposition gehalten werden, wobei die Werkzeughalter (14) mittels eines Greifarmes (20) jeweils einzeln in die Spindel (11) eingesetzt werden, und die Greifarme (20) um die Spindel (11) herum verteilt angeordnet sowie gemeinsam an einer relativ zur Spindel (11) in Richtung der Spindelachse (15) verschiebbaren, die Spindel (11) umschließenden Hülse (28) befestigt sind, und ferner die Werkzeughalter (14) auf ihrem Weg zwischen Magazinposition und Arbeitsposition im wesentlichen vertikalachsig gehalten sind, dadurch gekennzeichnet, daß die Werkzeughalter (14) in der Magazinposition in jeweils einen als Köcher ausgestalteten Hohlraum (40) eingeführt sind, der mindestens für die Konusse (13) eine geschlossene Abdeckung bildet, und daß der Köcher nach unten geöffnet sowie in der Hülse (28) ausgebildet ist.

2. Werkzeugmaschine nach Anspruch 1, dadurch gekennzeichnet, daß ein Deckel vorgesehen ist, um den Hohlraum (40) zu verschließen, wenn sich der zugehörige Werkzeughalter (14) in der Arbeitsposition befindet.

3. Werkzeugmaschine nach Anspruch 2, dadurch gekennzeichnet, daß der Deckel als Blech (46) an einem verschwenkbaren Abschnitt des Greifarmes (20) ausgebildet ist, und daß das Blech (46) beim Verschwenken des Werkzeughalters (14) von der Magazinposition in die Arbeitsposition mittels des Greifarmes (20) selbsttätig in eine den Hohlraum (40) verschließende Position verschwenkt wird.

## Claims

1. A machine tool comprising a rotating spindle (11), and a plurality of tool holders (14) having a taper (13) and being adapted to be inserted with their taper (13) from a magazine position distant from the spindle (11) into a working position in the spindle (11), whereas the remaining tool holders (14) are kept in their magazine position during a machining operation, the tool holders (14) being individually inserted into the spindle (11) by means of a gripper (20), the grippers (20) being arranged around the spindle (11) and being commonly connected to a sleeve (28) encircling the spindle (11) and being displaceable relative to the spindle (11) in the direction of the spindle axis (15), the tool holders (14) being held essentially vertically during their travel between the magazine position and the working position, characterized in that the tool holders (14), in the magazine position, are inserted each into a cup-shaped hollow cavity (40) establishing a closed cover for at least the tapers (13), the cup opening downwardly and being provided within the sleeve (28).

2. The machine tool of claim 1, characterized in that a closure is provided for closing the hollow cavity (40) when its associated tool holder (14) is in the working position.

3. The machine tool of claim 2, characterized in that the closure is designed as a sheet metal (46) on a swivable section of the gripper arm (20), and that the sheet metal (46) is automatically swivelled into a position closing the cavity (40) when the tool holder (14) is swivelled from the magazine position into the working position by means of the gripper arm (20).

## Revendications

1. Machine-outil, avec une broche tournante (11) et une pluralité de porte-outils (14), présentant un cône (13) et susceptibles d'être insérés, depuis une position de magasin, espacée de la broche (11), par le cône (13), dans une position de travail, dans la broche (11), tandis que les autres porte-outils (14) sont maintenus pendant un processus d'usinage, dans la position de magasin, les porte-outils (14) étant chaque fois insérés individuellement dans la broche (1), au moyen d'un bras de préhension (20), et les bras de préhension (20) étant répartis autour de la broche (11), ainsi que fixés conjointement, sur une douille (28) entourant la broche (11) et susceptible d'être déplacée par rapport à la broche (11), dans la direction de l'axe de broche (15), et en outre les porte-outils (14) étant maintenus pratiquement avec leurs axes verticaux, sur leur course entre la position en magasin et la position de travail, caractérisée en ce que les porte-outils (14) sont insérés dans la position en magasin, chaque fois dans un espace creux (40) réalisé sous forme de carquois, formant au moins un recouvrement fermé pour les cônes (13), et en ce que le carquois est ouvert vers le bas, ainsi que réalisé dans la douille (28).

2. Machine-outil selon la revendication 1, caractérisée en ce qu'il est prévu un couvercle, afin d'obturer l'espace creux (40), lorsque le porte-outil (14) respectif se trouve en position de travail.

3. Machine-outil selon la revendication 2, caractérisée en ce que le couvercle est réalisé sous forme d'une tôle (46), sur une portion pivotante du bras de préhension (20), et en ce que la tôle (46) est pivotée automatiquement en une position obturant l'espace creux (40), au moyen du bras de préhension (20), lors du pivotement du porte-outil (14) de la position de magasin vers la position de travail.
